# EUROPEAN PATENT APPLICATION

(11) **EP 3 381 851 A2**
(43) Date of publication of application: **03.10.2018**
(21) Application number: 18164659.7
(22) Date of filing: 28.03.2018
(51) Int. Cl.: B66B 1/46

(54) **ELEVATOR SERVICE REQUEST USING USER DEVICE WITH APP-RETAINED FLOOR PAIRS**

(30) Priority: 31.03.2017 US 201715476727
(71) Applicant: Otis Elevator Company, Farmington, Connecticut 06032 (US)
(72) Inventor: BALDI, Emily, Farmington, CT Connecticut 06032 (US); SIMCIK, Paul A., Farmington, CT Connecticut 06032 (US); BROTHERS, Sheryl, Farmington, CT Connecticut 06032 (US)
(74) Representative: Schmitt-Nilson Schraud Waibel Wohlfrom Patentanwälte Partnerschaft mbB

(57) **Abstract**

Methods and systems for making elevator service requests, including populating a recents list on a computing device with a floor pair having an origination floor and a destination floor, receiving a user input on the recents list including any of a swipe input on the pair, a press, drag and drop of an icon associated with an origination onto an icon associated with a destination in the pair, a press, drag and drop of an icon associated with an origination in one pair onto an icon associated with a destination in another pair, and a press, drag and drop of an icon associated with a former destination as an origination in one pair onto an icon associated with a former origination as a destination in another pair. The method also including generating a service request packet based on the new service request and transmitting it to an elevator controller.

## Description

The subject matter disclosed herein generally relates to elevator service requests for elevators and, more particularly, to elevator service requests using user devices.

Elevator systems can receive input from users through mechanical, electrical, and/or electromechanical device located within or as part of the elevator system. That is, requests for elevator service are typically made by potential passengers when the passenger is already located at an elevator landing. However, having remote mechanism to make such requests may be advantageous. For example, the use of personal user devices can enable remote elevator service requests, thus improving user experience and/or enabling improved elevator management within a building.

Passengers using elevators can generally give calls to elevators either in an elevator car and/or in an elevator lobby. Elevator lobbies are typically provided with up/down pushbuttons, by means of which a passenger can order an elevator to the call floor and simultaneously indicate his/her travel direction. After the elevator has arrived at the call-giving floor, the passenger moves into the elevator car and indicates his/her destination floor with the pushbuttons of the car panel in the elevator car. When the call-giving device is portable, or when the system does not otherwise know from which floor a call comes, a destination call may need to include information about the departure floor. After it has received a destination call the control system of the elevator system allocates the optimal elevator for the use of the passenger and transmits information about this to the call-giving device. In this way the elevator system identifies to the user in response to a destination call the elevator allocated to him/her.

To improve the call-giving of an elevator system with a mobile device, one approach used has been to present the user making a destination call, a convenient way of selecting a departure floor and destination floor. For example some systems, a departure floor-destination floor pair may be selected by the user on the basis of a touch detected with the touch-sensitive display. Selection of both the departure floor and the destination floor can thus be performed with one selection, and even with just one touch.

Moreover if a departure floor-destination floor selection is to be formed, in which case the departure floor and the destination floor that are identified by the departure floor-destination floor pair are set to correspond to the departure floor and the destination floor identified by a destination call signal sent earlier with the call-giving device to the control system of the elevator system. In this way one or more new pairs can be formed. In this way the list of pairs can be updated, and are based on recent calls that can be selected by a user. The new departure floor-destination floor pair to be formed is recorded in the memory of the destination call-giving device. However, such systems may be limited in selections and may not address the need to readily select differing floors in the retained pairs of floors.

According to one embodiment, described herein is a method and system for making elevator service requests. The method including populating, by a computing device comprising a processor, a recents list with at least one retained floor pair, wherein each retained floor pair includes at least an origination floor and a destination floor, displaying the recents list on a display, and receiving at least one user input indicating a new elevator service request related to at least one of the retained floor pairs. The user input includes at least one of: a swipe input on the at least one retained floor pair; a press and drag to and drop of an icon associated with an origination floor onto an icon associated with a destination floor in a single retained floor pair; a press and drag to and drop of an icon associated with an origination floor in one retained floor pair onto an icon associated with a destination floor in another retained floor pair; and a press and drag to and drop of an icon associated with a former destination floor as an origination floor in one retained floor pair onto an icon associated with a former origination floor as a destination floor in another retained floor pair. The method also includes generating an elevator service request packet based on the new elevator service request and transmitting the elevator service request packet to an elevator controller to make an elevator service request.

In addition to one or more of the features described herein, or as alternatives, further embodiments of the methods may include that the elevator service request packet includes information including the origination floor and the destination floor.

In addition to one or more of the features described herein, or as alternatives, further embodiments of the methods may include that the computing device is a smartphone.

In addition to one or more of the features described herein, or as alternatives, further embodiments of the methods may include displaying an information region on the user interface, the information region including building information.

In addition to one or more of the features described herein, or as alternatives, further embodiments of the methods may include displaying a call elevator icon on the user interface in the recents list, the call elevator icon associated with the user input regarding an elevator service request and wherein the user input received on the recents list is at the call elevator icon.

In addition to one or more of the features described herein, or as alternatives, further embodiments of the methods may include receiving a swipe input on the recents list, wherein generating the elevator service request packet is based on the swipe input.

In addition to one or more of the features described herein, or as alternatives, further embodiments of the methods may include that receiving a drag to and drop of an icon associated with an origination floor onto an icon associated with a destination floor in a single retained floor pair.

In addition to one or more of the features described herein, or as alternatives, further embodiments of the methods may include that receiving drag to and drop of an icon associated with an origination floor in one retained floor pair onto an icon associated with a destination floor in another retained floor pair

In addition to one or more of the features described herein, or as alternatives, further embodiments may include that a user input is a press and hold on the at least one retained floor pair in the recents list, wherein the user device provides additional information regarding the floors in the selected retained floor pair

In addition to one or more of the features described herein, or as alternatives, further embodiments of the methods may include that receiving drag to and drop of an icon associated with a former destination floor as an origination floor in one retained floor pair onto an icon associated with a former origination floor as a destination floor in another retained floor pair.

In addition to one or more of the features described herein, or as alternatives, further embodiments of the methods may include storing data related to a most recent elevator trip in a memory and displaying a retained floor set associated with the most recent elevator trip on the display at a top of the recents list.

In addition to one or more of the features described herein, or as alternatives, further embodiments of the methods may include storing data related to a most recent elevator trip in a memory; and at least one of displaying a retained floor set associated with the most recent elevator trip on the display at a top of the recents list or not displaying a retained floor set associated with the most recent elevator trip on the display of the recents list if the opposite direction trip is already displayed, or not displaying a retained floor set associated with the most recent elevator trip on the display of the recents list if the origination floor and the destination floor of the most recent elevator trip is already displayed anywhere in the recents list.

Also described herein in an embodiment is a user device for making elevator service requests. The user device including at least one processor, a display and a memory having instructions stored thereon that, when executed by the at least one processor, cause the user device to execute a method. The method including populating a recents list with at least one retained floor pair, wherein each retained floor pair includes at least an origination floor and a destination floor, displaying the recents list on the display, and receiving a user input on the recents list indicating a new elevator service request related to one of the retained floor pairs. The user input includes at least one of: a swipe input on the at least one retained floor pair; a press and drag to and drop of an icon associated with an origination floor onto an icon associated with a destination floor in a single retained floor pair; a press and drag to and drop of an icon associated with an origination floor in one retained floor pair onto an icon associated with a destination floor in another retained floor pair; and a press and drag to and drop of an icon associated with a former destination floor as an origination floor in one retained floor pair onto an icon associated with a former origination floor as a destination floor in another retained floor pair. The method also includes generating an elevator service request packet based on the new elevator service request and transmitting the elevator service request packet to an elevator controller to make an elevator service request.

Technical effects of embodiments of the present disclosure include user devices and methods of operation configured to provide user interfaces and receive inputs thereon to generate elevator service requests.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The present disclosure is illustrated by way of example and not limited in the accompanying figures in which like reference numerals indicate similar elements.
FIG. 1 is a schematic illustration of an exemplary elevator system that may employ various embodiments of the present disclosure;
FIG. 2 is a schematic block diagram illustrating a system that may be configured in accordance with one or more embodiments of the present disclosure;
FIG. 3 is a schematic illustration of a system in accordance with an embodiment of the present disclosure;
FIG. 4A is a schematic illustration of a computing system of a user device in accordance with an embodiment of the present disclosure;
FIG. 4B is a schematic illustration of a computing system of an elevator controller in accordance with an embodiment of the present disclosure;
FIG. 5A is a schematic illustration of a user interface on a user device in accordance with an embodiment of the present disclosure;
FIG. 5B is another schematic illustration of the user interface in accordance with an embodiment of the present disclosure;
FIG. 5C is another schematic illustration of the user interface in accordance with an embodiment of the present disclosure;
FIG. 6 illustrates a flow process for interacting with an elevator system in accordance with another embodiment of the present disclosure.

In general the embodiment described herein relate to methods and systems for making elevator service requests, method and system for making elevator service requests, the methods including populating, by a computing device comprising a processor, a recents list with at least one retained floor pair, wherein each retained floor pair includes an origination floor and a destination floor, The pairs may be displayed in a recents list on a display of a mobile device. The embodiments also include receiving a user input indicating a new elevator service request related to one of the groups, and transmitting the elevator service request to an elevator controller.

For the purposes of promoting an understanding of the principles of the present disclosure, reference will now be made to the embodiments illustrated in the drawings, and specific language will be used to describe the same. It will nevertheless be understood that no limitation of the scope of this disclosure is thereby intended. The following description is merely illustrative in nature and is not intended to limit the present disclosure, its application or uses. It should be understood that throughout the drawings, corresponding reference numerals indicate like or corresponding parts and features. As used herein, the term controller refers to processing circuitry that may include an application specific integrated circuit (ASIC), an electronic circuit, an electronic processor (shared, dedicated, or group) and memory that executes one or more software or firmware programs, a combinational logic circuit, and/or other suitable interfaces and components that provide the described functionality.

Additionally, the term "exemplary" is used herein to mean "serving as an example, instance or illustration." Any embodiment or design described herein as "exemplary" is not necessarily to be construed as preferred or advantageous over other embodiments or designs. The terms "at least one" and "one or more" are understood to include any integer number greater than or equal to one, i.e. one, two, three, four, etc. The terms "a plurality" are understood to include any integer number greater than or equal to two, i.e. two, three, four, five, etc. The term "connection" can include an indirect "connection" and a direct "connection".

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

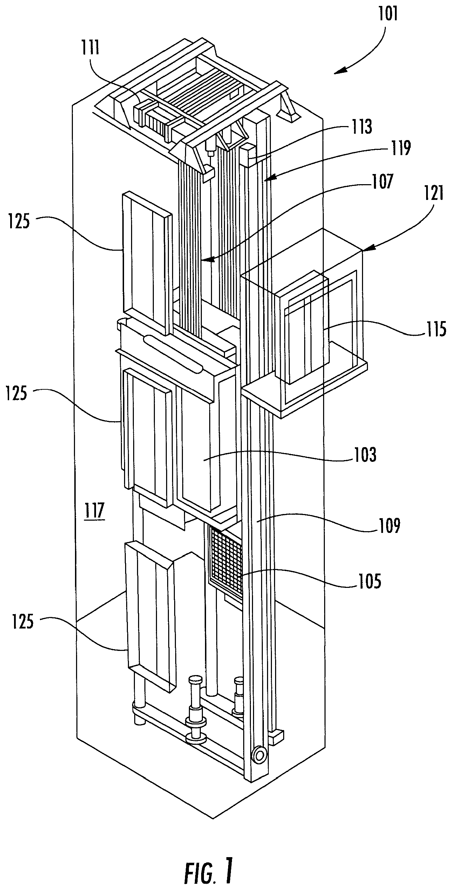

FIG. 1 is a perspective view of an elevator system 101 including an elevator car 103, a counterweight 105, a roping 107, a guide rail 109, a machine 111, a position encoder 113, and a controller 115. The elevator car 103 and counterweight 105 are connected to each other by the roping 107. The roping 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The roping 107 engages the machine 111, which is part of an overhead structure of the elevator system 101. The machine 111 is configured to control movement between the elevator car 103 and the counterweight 105. The position encoder 113 may be mounted on an upper sheave of a speed-governor system 119 and may be configured to provide position signals related to a position of the elevator car 103 within the elevator shaft 117. In other embodiments, the position encoder 113 may be directly mounted to a moving component of the machine 111, or may be located in other positions and/or configurations as known in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position encoder 113. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor.

Although shown and described with a roping system, elevator systems that employ other methods and mechanisms of moving an elevator car within an elevator shaft, including ropeless elevator systems and/or elevator systems with more than one elevator car in each elevator shaft, may employ embodiments of the present disclosure. FIG. 1 is merely a non-limiting example presented for illustrative and explanatory purposes. It should be appreciated that any elevator system or system configuration may be employed.

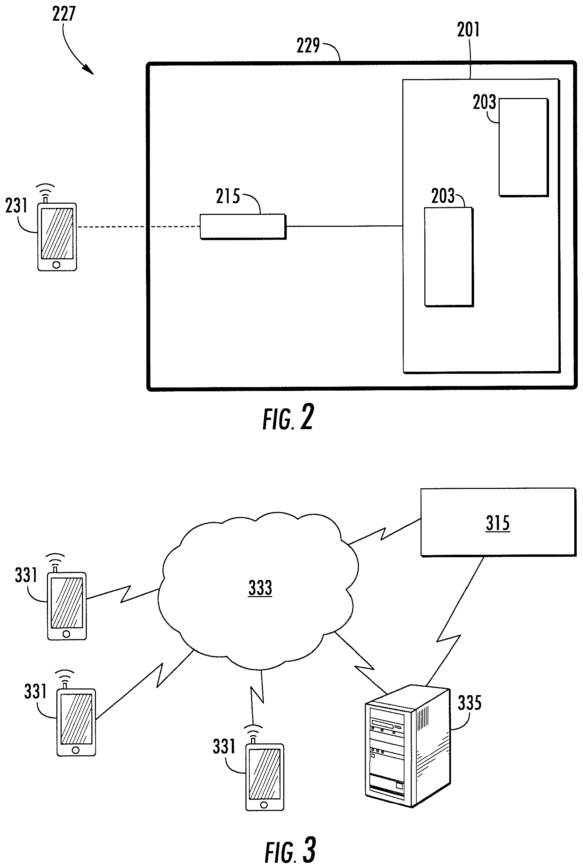

Turning now to FIG. 2, a schematic illustration of a building system 227 in an example embodiment of the present disclosure is shown. The building system 227 includes an elevator system 201 installed within a structure 229 (e.g., a building). In some embodiments, the structure 229 may be an office building or a collection of office buildings that may or may not be physically located near each other. The structure 229 may include any number of floors that are accessible by the elevator system 201 and thus the structure 229 can include any number of landings (e.g., as shown in FIG. 1). Persons entering the structure 229 may enter at a lobby floor and may travel to a destination floor via one or more elevator cars 203 that are part of the elevator system 201.

The elevator system 201 may include one or more computing devices, such as an elevator controller 215. The elevator controller 215 may be configured to control dispatching operations for one or more elevator cars 203 associated with the elevator system 201. It is understood that the elevator system 201 may utilize more than one elevator controller 215, and that each elevator controller may control a group of elevators cars 203. Although two elevator cars 203 are shown in FIG. 2, those of skill in the art will appreciate that any number of elevators cars may be employed in the elevator and building systems that employ embodiments of the present disclosure. The elevator cars 203 can be located in the same hoistway or in different hoistways so as to allow coordination amongst elevator cars 201 in different elevator banks serving different floors (e.g., sky lobbies, etc.). It is understood that the elevator system 201 may include various features as described above with reference to FIG. 1 and may also include other non-depicted elements and/or features as known in the art (e.g., drive, counterweight, safeties, etc.). Moreover, the elevators may be employed in any configuration with all elevators serving all floors of the building, some elevators only serving certain floors, a first group of elevator serving lower floors of a building and a sky lobby and a second group of elevators serving the sky lobby and upper floors of the building, etc.

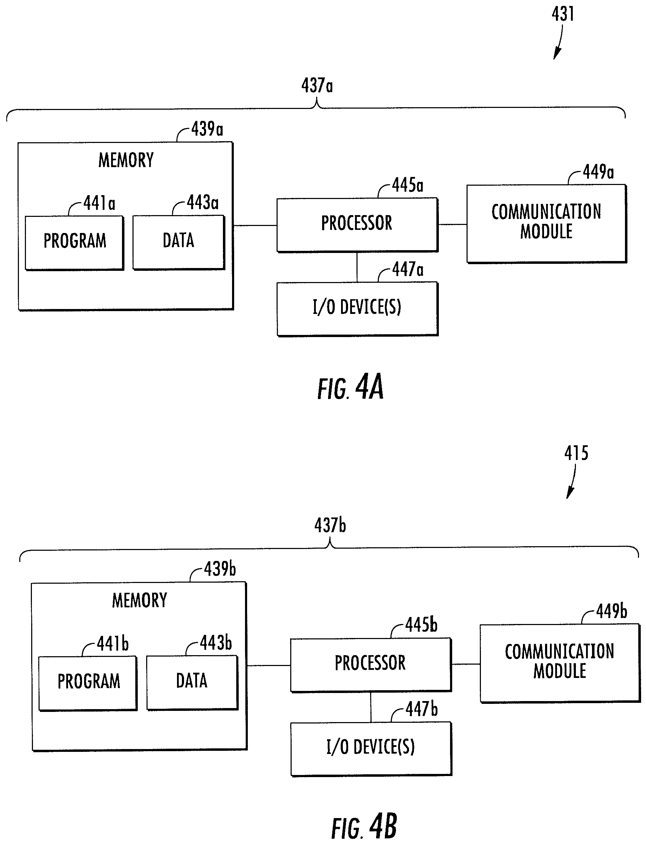

Also shown in FIG. 2 is a user device 231, such as a mobile device (e.g., smart phone, smart watch, wearable technology, laptop, tablet, etc.). The user device 231 may include a mobile and/or personal device that is typically carried by a person, such as a phone, PDA, etc. The user device 231 may include a processor, memory, and communication module(s), as shown in FIG. 4A. As described below, the processor can be any type or combination of computer processors, such as a microprocessor, microcontroller, digital signal processor, application specific integrated circuit, programmable logic device, and/or field programmable gate array. The memory can be a non-transitory computer readable storage medium tangibly embodied in the user device 231 including executable instructions stored therein, for instance, as firmware. The communication module may implement one or more communication protocols as described in further detail herein, and may include features to enable wireless communication with external and/or remote devices separate from the user device 231. The user device 231 may further include a user interface (e.g., a display screen, a microphone, speakers, input elements such as a keyboard or touch screen, etc.) as known in the art.

The elevator controller 215 may include a processor, memory, and a communication module as shown in FIG. 4B. Similar to the user device 231, the processor memory, and communication module may be implemented as described above, but as part of the elevator system 201.

A user device and an elevator controller in accordance with embodiments of the present disclosure can communicate with one another, e.g., as shown in FIG. 3. For example, one or more user device 331 and the elevator controller 315 may communicate with one another when proximate to one another (e.g., within a threshold distance). The user device 331 and the elevator controller 315 may communicate over a network 333, that may be wired or wireless. Wireless communication networks can include, but are not limited to, Wi-Fi, short-range radio (e.g., Bluetooth®), near-field infrared, cellular network, etc. In some embodiments, the elevator controller 315 may include, or be associated with (e.g., communicatively coupled to) one or more networked building elements 335, such as computers, kiosks, beacons, hall call fixtures, lanterns, bridges, routers, network nodes, etc. The networked element 335 may also communicate directly or indirectly with the user devices 331 using one or more communication protocols or standards (e.g., through the network 333).

For example, the networked element 335 may communicate with the user devices 331 using near-field communications (NFC) (e.g., network 333) and thus enable communication between the user devices 331 and the elevator controller 315. In some embodiments, the elevator controller 315 may establish communication with one or more user devices 331 that are outside of the structure/building. Such connection may be established with various technologies including GPS, triangulation, or signal strength detection, by way of non-limiting example. Such technologies that allow communication can provide users and the system(s) described herein more time to perform the described functions. In example embodiments, the user devices 331 communicate with the elevator controller 315 over multiple independent wired and/or wireless networks. Embodiments are intended to cover a wide variety of types of communication between the user devices 331 and the elevator controller 315, and embodiments are not limited to the examples provided in this disclosure.

The network 333 may be any type of known communication network including, but not limited to, a wide area network (WAN), a local area network (LAN), a global network (e.g. Internet), a virtual private network (VPN), a cloud network, and an intranet. The network 333 may be implemented using a wireless network or any kind of physical network implementation known in the art. The user devices 331 and/or the networked devices 335 may be coupled to the elevator controller 315 through multiple networks 333 (e.g., cellular and Internet) so that not all user devices 331 and/or the networked devices 335 are coupled to the elevator controller 315 through the same network 333. One or more of the user devices 331 and the elevator controller 315 may be connected to the network 333 in a wireless fashion. In one non-limiting embodiment, the network 333 is the Internet and one or more of the user devices 331 execute a user interface application (e.g. a web browser) to contact the elevator controller 315 through the network 333.

Embodiments provided herein are direct to apparatuses, systems, and methods for making and fulfilling requests for elevator service. In some embodiments, a request for elevator service may be communicated over one or more lines, connections, or networks, such as network 333, e.g., a request made by a user device 331 and transmitted through the network 333 to the elevator controller 315 to request elevator service. The request for service may be initiated by a mobile device controlled by and/or associated with a user, in a passive or active manner. In some embodiments, the mobile device may be operative in conjunction with a Transmission Control Protocol (TCP) and/or a User Datagram Protocol (UDP). In some embodiments, a request for service may be authenticated or validated based on a location of the user device. In some embodiments, a request for service may be fulfilled in accordance with one or more profiles, such as one or more user or mobile device profiles. In some embodiments the profiles may be registered as part of a registration process. In some embodiments, an elevator system may be registered with a service provider.

As noted, the elevator controller 315 may be associated with an elevator system (e.g., elevator systems 101, 201). The elevator controller 315 may be used to process or fulfill the requests for elevator service that are submitted from one or more user devices 331. The requests for elevator service may be received through the network 333 from the one or more user devices 331 and/or the networked building elements 335, which may be mobile devices, including, but not limited to phones, laptops, tablets, smartwatches, etc. One or more of the user devices 331 may be associated with (e.g., owned by) a particular user. The user may use his/her user device(s) 331 to request elevator service.

For example, a user of a user device 331 may request service in an affirmative or active manner. The user may enter a request for elevator service using an I/O interface of the user device 331, as described herein. That is, in some embodiments, an application, app, or other program may be installed and operated on the user device 331 wherein the user may interact with the app or program to request elevator service.

In other embodiments, or in combination therewith, the user may request elevator service in a passive manner. For example, a profile may be established for the user or the particular user device 331, optionally as part of a registration process with, e.g., a service provider and/or through historical data tracking. The profile may contain a log of the user's history and/or activities, such as where the user has gone or traveled to, the user's preferences, or any other data that may be applicable to the user. In some embodiments, the user profile may be accessed or analyzed to determine the likelihood or probability that the user will request elevator service at a particular moment in time (e.g., a particular day or time of day). Resources may be provisioned or allocated to fulfill the request (e.g., an elevator car call or reservation may be placed) in the event that the probability of requested service, or consumption, or use of an elevator is anticipated.

The request for service may be conveyed or transmitted from the user device 331 through the network 333. For example, the request for service may be transmitted to and/or over the Internet and/or a cellular network. The network(s) 333 may include infrastructure that may be organized to facilitate cloud computing. For example, one or more servers, such as a primary message server, a backup message server, and a device commissioning message server may be employed as part of the network 333.

In some embodiments, the request for service may specify a type of service requested, at any level of detail or abstraction. For example, a first request for service may specify that elevator service is requested, a second request for service may specify one or more of a departure floor and/or a destination floor, and a third request for service may specify that elevator service is desired to accommodate a heavy load (e.g., freight or cargo) with a number of other users or passengers in an amount less than a threshold. In some embodiments, the request for service transmitted from the user device 331 may include an identifier associated with the user or the particular user device 331 in order to allow the elevator controller 315 to distinguish between users and/or user devices 331.

Referring now to FIGS. 4A-4B, schematic block diagram illustrations of example computing systems 437a, 437b for a user device 431 and an elevator controller 415, respectively, are shown. The computing system 437a may be representative of computing elements or components of user devices 431, networked elements, mobile devices, etc. as employed in embodiments of the present disclosure. The computing system 437b may be representative of computing elements or components of controllers, elevator controller, networked elements, computers, etc. For example, the computing system 437a can be configured as part of a user device 431, e.g., user device 231, 331 shown above. The computing system 437a can be configured to operate the user device 431, including, but not limited to, operating and controlling a touch-screen display to display various output and receive various input from a user's interaction with the touch-screen display. The computing system 437b can be configured as part of an elevator controller, e.g., elevator controller 115, 215, 315 shown above. The computing system 437b can be a computer or other type of controller that is physically connected or remote from mechanical control of the elevator system. The computing system 437b may be connected to various elements and components within a building that are associated with operation of an elevator system.

As shown, the computing system 437a includes a memory 439a which may store executable instructions and/or data. The executable instructions may be stored or organized in any manner and at any level of abstraction, such as in connection with one or more applications, apps, programs, processes, routines, procedures, methods, etc. As an example, at least a portion of the instructions are shown in FIG. 4A as being associated with a program 441a. The memory 439a can include RAM and/or ROM and can store the program 441a thereon, wherein the program 441a may be a mobile operating system and/or mobile applications to be used on the user device 431.

Further, the memory 439a may store data 443a. The data 443a may include profile or registration data (e.g., in a user device), a device identifier, or any other type(s) of data. The executable instructions stored in the memory 439a may be executed by one or more processors, such as a processor 445a, which may be a mobile processor in the user device 431. The processor 445a may be operative on the data 443a and/or configured to execute the program 441a. In some embodiments, the executable instructions can be performed using a combination of the processor 445a and remote resources (e.g., data and/or programs stored in the cloud (e.g., remote servers)).

The processor 445a may be coupled to one or more input/output (I/O) devices 447a. In some embodiments, the I/O device(s) 447a may include one or more of a physical keyboard or keypad, a touchscreen or touch panel, a display screen, a microphone, a speaker, a mouse, a button, e.g., parts or features of a telephone or mobile device (e.g., a smartphone. For example, the I/O device(s) 447a may be configured to provide an interface to allow a user to interact with the user device 431. In some embodiments, the I/O device(s) 447a may support a graphical user interface (GUI) and/or voice-to-text capabilities for the user device 431.

The components of the computing system 437a may be operably and/or communicably connected by one or more buses. The computing system 437a may further include other features or components as known in the art. For example, the computing system 437a may include one or more communication modules 449a, e.g., transceivers and/or devices configured to receive information or data from sources external to the computing system 437a. In one non-limiting embodiments, the communication modules 449a of the user device 431 can include a near-field communication chip (e.g., Bluetooth®, Wi-Fi, etc.) and a cellular data chip, as known in the art. In some embodiments, the computing system 437a may be configured to receive information over a network (wired or wireless), such as network 333 shown in FIG. 3. The information received over the network may be stored in the memory 439a (e.g., as data 443a) and/or may be processed and/or employed by one or more programs or applications (e.g., program 441a).

The computing systems 437a may be used to execute or perform embodiments and/or processes described herein, such as within and/or on user devices. For example, the computing system 437a of the user device 431 enables a user interface to enable a user to make service requests to an elevator. To make such service requests, the user device 431, and the computing system 437a thereof, may communicate with the computing system 437b of the elevator controller 415.

For example, as shown in FIG. 4B, the elevator controller 415 includes a computing system 437b that is used to receive commands and/or instructions (e.g., data) from remote devices, including, but not limited to, the user device 431. The computing system 437b is configured to control operation of and/or reservation of elevator cars within one or more elevator hoistways. The computing system 437b (and program 439b stored thereon) may be configured to process requests for elevator service received from one or more user devices (e.g., user device 431). As part of the processing, the computing system 437b may validate or authenticate the user device 437 such that only certain user devices 43 1 may be able to communicate and/or make elevator service requests to the elevator controller 415.

As shown, the computing system 437b of the elevator controller 415 includes components similar to that shown and described with respect to the computing system 437a of FIG. 4A. As such, the elevator controller computing system 437b includes a memory 439b with at least one program 441b and data 443b stored thereon. The data 443b may include profile or registration data (e.g., related to user devices), elevator car data, elevator control data and/or programs, or any other type(s) of data associated with control and/or operation of an elevator system. A processor 445b may be configured to receive service requests through a communication module 449b from one or more user devices 431. The computing system 437b may further include one or more I/O devices 447b, including, but not limited to, control connections to one or more elevator mechanical controls and/or elevator cars. Further, in some configurations, the I/O devices 447b can include a monitor or display screen as part of a user interactive computing system that is associated with the elevator system and/or elevator controller 415.

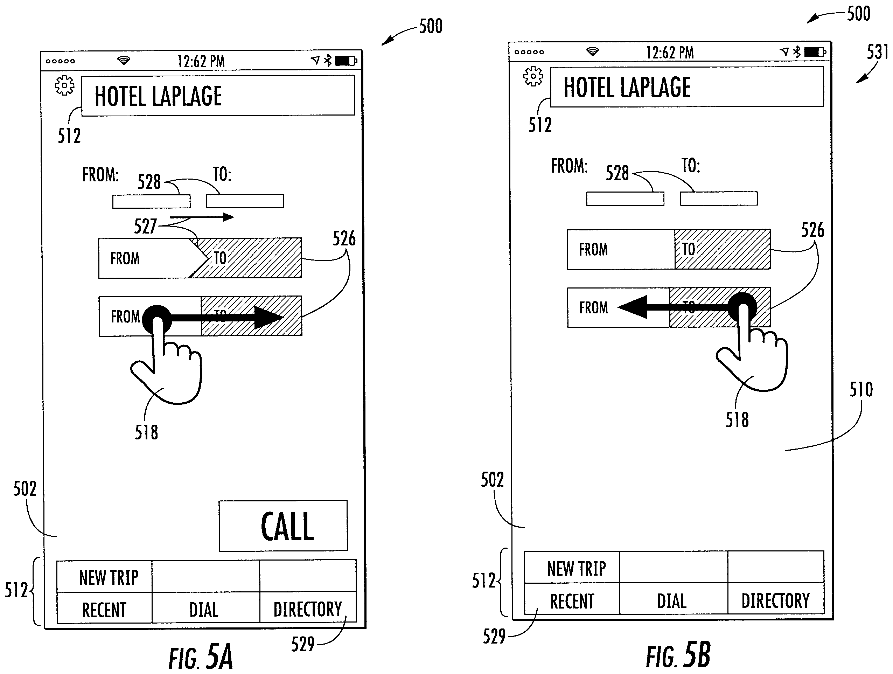

Turning now to FIGs. 5A-5C, various illustrations of a user interface 500 implemented on a user device 531 (comparable to 231, 331, 431) in accordance with several embodiments of the present disclosure are shown. As shown in FIGs. 5A-5C, a screen 502 of a user device 531 may display the user interface 500 that represents a screen or interface of an application in accordance with an embodiment of the present disclosure. The user interface 500 can enable a user to make elevator service requests by operation and interaction with the user interface 500 displayed on the screen 502. That is, the user interface 500 can enable a user device 531 to communicate with an elevator controller to make an elevator service request.

In the embodiment shown in FIGS. 5A-5C, retained floor pairs 526 may be stored in the application or program (or memory associated therewith). Embodiments provided herein enable simple ways to interact with the retained floor pairs 526, to select a departure floor and a destination floor from the retained floor pairs 526, to gain more information related to one or more of the floors, to remove retained floor pairs 526, to rename the retained floor pairs 526, place an elevator service request to travel between the retained floor pairs 526, etc.

The retained floor pairs 526 may be set, established, or stored based on use of the features of the user interface 500 in a conventional manner as in known in the art. The retained floor pairs 526 can be predefined, based on historical data of a particular user, based on popular origin-destination pairs of the particular building (e.g., cafeteria, gym, particular tenant, etc.), etc. As shown, the retained floor pairs 526 indicate an origin floor/landing on the left in FIGs. 5A-5C also labeled "From", and a destination floor/landing on the right thereof, also labeled "To", In some embodiments a direction indicator 527 may also be provided between the origin and destination floor/landing, for example, an arrow, or the icon may be shaped to indicate direction. Each of the retained floor pairs 526 can include alphanumeric characters, as illustrated. Further, as shown, any of the elements of the retained floor pairs 526 can include additional information, icons, etc. For example, as shown, if a letter or other icon or indicator is used to designate an origination or destination floor, an information icon 528 can be displayed over the icon or indicator, to thus provide information to a user regarding the indicated floor. Further, such information icon can be displayed over a numbered floor and can provide information about the floor (e.g., if a cafeteria is located on the particular floor).

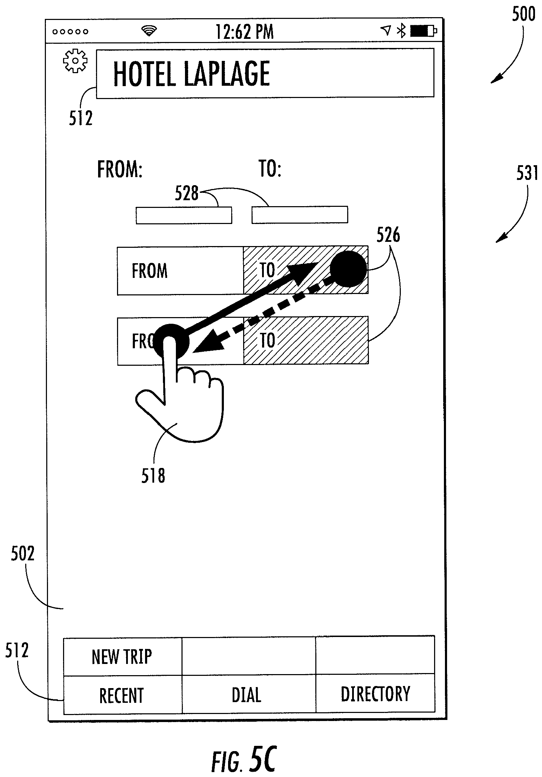

Further, as illustrated in FIG. 5A, a user 518 may press and hold on a retained floor pair 526, a display element thereof, and/or an information icon 528 to reveal more information about a particular or specific floor. Additionally, as illustrated in FIG. 5C, a user 518 may press and hold on an origin floor and then swipe/drag (e.g., to the right) onto the destination floor of the retained floor pair 526 to signal an intent to repeat that trip and enable selection of the particular retained floor pair 526 from the list of retained floor pairs 526 to initiate the call request.

In some configurations, as depicted at FIG 5B, the user 518 may wish to travel in the opposite direction to that indicated with a particular retained floor pair 526. In this instance the use 518 may swipe to the left on a particular retained floor pair 526 to signal an intent to return to the original floor. In an embodiment, the user may alternatively press and hold on what was a destination floor in the original retained floor pair 526 and then drag (e.g., to the left) onto the destination floor (origin floor of the original trip) of the on the retained floor pair 526 to signal an intent to reverse that trip and initiate the call request.

In yet another embodiment, FIG. 5C depicts the instance where the desired departure floor and destination floor may not be listed together as a retained floor pair 526. However, the retained floor pairs may include many of the floors commonly traveled by a user and as a result the current departure floor and the desired destination floor may be listed as parts of different retained floor pairs 526. In this instance the user 518 may press and hold on any floor designation and in an existing retained floor pair 526 signaling a selection as a departure floor, and then drag to the left or right onto a second floor of another existing retained floor pair 526 to signal the selection of that floor as the destination floor for the trip.

Further, in some embodiments, users may assign custom labels (e.g., "home," "gym," "cafeteria," "work," "HR," "dentist," etc.) to each retained floor pair 526. In such configuration, the user may interact with the custom label as indicated by the gestures described above. Further, for example, when pressing and holding a custom label, the alphanumeric information of the retained floor pair 526 may be revealed (e.g., display of floor numbers).

As shown, the user interface 500 further includes an information region 512. In some embodiments, the information region 512 can include a dropdown/popup menu to enable a user to select different addresses/buildings. Further, as shown, the information region 512 can include various interactive elements 529. In the illustrations of FIGS. 5A-5C, the interactive elements 529 include a "Recents" tab a "Dial" tab, and a "Directory" tab. In one non-limiting embodiments, a user can click on the "Recents" tab to display the user interface 500 shown in FIGS. 5A-5C. The "Recents" tab may provide a recents list or list of elevator trips that have recently or historically been taken by a user of the user device 531. That is, a recents list may be displayed to a user such that the user can view recent or historical elevator trips. The "Recents" list can include one or more retained floor pairs 526, as shown in FIGS. 5A-5C.

Similarly, a user can click on the "Dial" tab another interactive element 529 to display dial of the on the user interface 500 where the user may elect to manually select the origin floor and a destination floor, or just a destination floor, to create an elevator call. In one embodiment a keypad is presented for entry of the floor information. Similarly, a user can click on the "Directory" tab of the interactive elements 529 to display a menu of call related actions, such as a contacts list (Directory of locations, people, floors in a given building, similar to a phone directory), the key pad (the elevator call interface), recent calls (saved/recent/favorite trips). the user interface 500 shown in FIGS. 5A-5C.

Additionally the information region 512 may include additional or alternative tabs as needed to facilitate planning and using the elevator trip. For example, the information region 512 may include a "New Trip" tab to display on the user interface 500 as screen for entering a new trip with a new departure floor and destination floor. In some embodiments, the "New Trip" tab may bring up key pad (not shown) to enable a user to input an origin and destination floor that is different from those depicted in the retained floor pairs 526.

In various configurations of a user interface 500 (e.g., similar to that shown in FIGS. 5A-5C), the recents list (i.e., the list of retained floor pairs 526) can be automatically sorted in chronological order, such that the most recent trip appears at the top of the list for easy access by a user. Further, the recents list can be automatically sorted by chronological order, may be sorted based on a time of day (e.g., based on historical data of the user), or may be sorted based on any other criteria. In some embodiments, an call elevator icon 514 (FIG. 5A) may be employed and modified per user configuration and/or localization. Further, in some embodiments, a "seamless" mode may be used to prompt or provide a most recent retained floor pair 526 could be automatically displayed or toggled for ease of use.

In yet another embodiment, as my be evident from the description with respect to FIG 5C, the user interface 500 does not need to duplicate the display of an Origination Floor and a Destination floor in the opposite order if the user travels in both directions using the same floor pairs at different times. Because the user can swipe in either direction, or drag and drop in either direction to different origination and destination floors, if a floor pair has a origination floor and a destination floor identified anywhere in "recents" list, there is no need to display that floor pair. The benefit of not duplicating entries in the list of Origination/Destination floor pairs is that less display 'real estate' is needed to provide the same level of functionality to the user. (for example, if a user travels from floor 5 to floor 8 and then from floor 8 to floor 5, it is only necessary to show the original 5 to 8 pair in the list of floor pairs since the user's swiping direction will indicate the desired direction of travel. Such a feature could be configurable by the user as some may prefer to see all the latest "recents" floor pairs.

As shown, the user interface 500 includes additional features, which may be optional. For example, an information region 512 can be located within the user interface 500. As shown, the information region 512 also provides information regarding the current building (e.g., an address) for which the user is using the interface 500 to communicate and/or control the elevator system. In some embodiments, such information region 512 can be static and/or defined by various information obtained by a user device (such as GPS, Wi-Fi location, etc.). In other embodiments, the information region 512 can be an interactive tab or other interactive feature that can enable a user to make selections, change displayed information, change the building selection to another building, etc. Although shown at the top and bottom of the user interface 500, the information region 512 can be located at any position on the user interface 500 and/or can take various geometric forms, colors, etc.

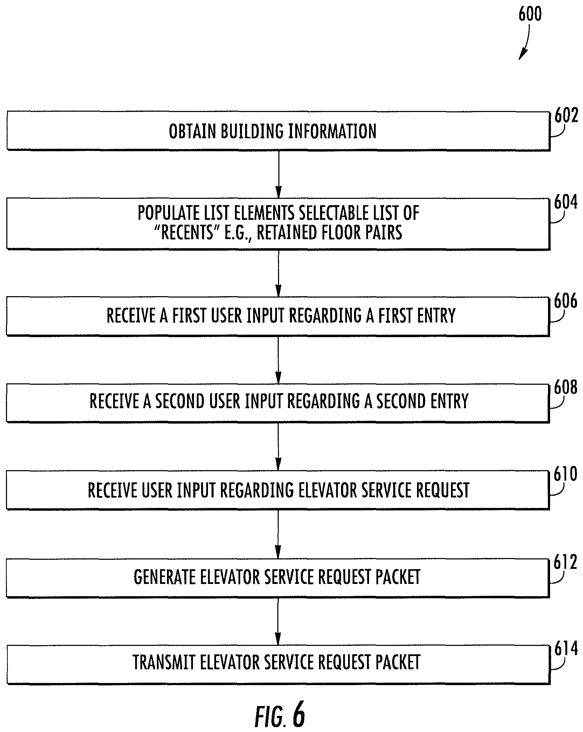

Turning now to FIG. 6, a flow process 600 in accordance with an embodiment of the present disclosure is shown. Flow process 600 may incorporate additional or alternative steps without departing from the scope of the present disclosure. The flow process 600 may be performed by a processor on a user device (e.g., as described above) with various related applications and/or data stored in a memory of the user device.

At block 602, the user device obtains building information over one or more networks (e.g., Wi-Fi, Bluetooth®, geolocation, RFID, local network, etc.). The building information can include information regarding one or more elevator systems located within the building. Such elevator system information can include all available floors to which elevator cars travel and/or information regarding the one or more floors (e.g., tenants, features of the floors, etc.). At block 604, list elements are populated in one or more lists of the "recents" retained floor pairs 526. In alternative configurations, the retained floor pairs 526 are retained digitally on the memory of the user device 531, and a user can interact with the retained floor information. In still further embodiments, a user may use voice input to interact with and prompt the system to reference and select from the floor information.

At block 606, a first user input request is received regarding a first entry (e.g., selection of a "from" or origination floor from one of the retained floor pairs 526 for that given building). At block 608, a second user input request is received regarding a second entry (e.g., selection of a "to" or destination floor). At Block 610 a user input is received regarding the elevator service request. In some embodiments depending on the user interface 500, for example a user swipes from a first entry to the second entry in a retained floor pair. In some configurations, depending on the user interface 500, for example, a user presses the icon for the origination floor as part of a retained floor pair 526 and then drags it to and drops at a second entry signaling selection of the destination floor.

It will be appreciate that the functions of block 608 and block 610 may be combines or part of the same step. For example, in one embodiment when a user selects and drags the icon for the origination floor and drops it to the destination floor, the placement on the destination floor may operate as both the selection of the second entry as well as the service request. Moreover, in another example, the user may swipe across one of the retained floor pairs/set of the user interface (e.g., on the retained floor pair/set list). Such swiping on the user interface 531 can indicate the selection of the origination floor, destination floor and the user's desire to request elevator service to travel between the elevator floors of the retained floor pair 526. In another embodiment, swiping may prompt a call elevator icon or button to appear on the user interface 500, which can then be selected by the user. In other embodiments, a call elevator button may be displayed with and adjacent to the retained floor pair(s)/set(s) and a user may select the call elevator button to make an elevator service request.

At block 612, an elevator service request packet can be generated within the user device in response to the user input request received at block 610. The elevator service request packet can be an electronic communication packet that is configured to be transmitted over one or more different types of communication networks and can be configured to be read by an elevator controller or a computer system/program associated with an elevator controller. At block 614, the generated elevator service request packet can be transmitted to an elevator controller or network of the building to which the elevator controller is connected. Accordingly, an elevator service request can be generated and requested remotely by operation of a user device employing flow process 800.

As described herein, in some embodiments various functions or acts may take place at a given location and/or in connection with the operation of one or more apparatuses, systems, or devices. For example, in some embodiments, a portion of a given function or act may be performed at a first device or location (e.g., user device), and the remainder of the function or act may be performed at one or more additional devices or locations (e.g., elevator controller). Further, embodiments described herein may be implemented using one or more technologies. In some embodiments, an apparatus or system may include one or more processors and memory storing instructions that, when executed by the one or more processors, cause the apparatus or system to perform one or more methodological acts as described herein. Various mechanical components known to those of skill in the art may be employed without departing from the scope of the present disclosure.

Embodiments may be implemented as one or more apparatuses, systems, and/or methods. In some embodiments, instructions may be stored on one or more computer program products or computer-readable media, such as a transitory and/or non-transitory computer-readable medium. The instructions, when executed, may cause an entity (e.g., an apparatus or system) to perform one or more methodological acts as described herein.

Aspects of the disclosure have been described in terms of illustrative embodiments thereof. Numerous other embodiments, modifications and variations within the scope and spirit of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional.

The use of the terms "a", "an", "the", and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments.

## Claims

1. A method for making elevator service requests, the method comprising:
populating, by a computing device comprising a processor, a recents list with at least one retained floor pair, wherein each retained floor pair includes at least an origination floor and a destination floor;
displaying the recents list on a display;
receiving at least one user input indicating a new elevator service request related to at least one of the retained floor pairs, wherein the user input includes at least one of;
a swipe input on the at least one retained floor pair,
a press and drag to and drop of an icon associated with an origination floor onto an icon associated with a destination floor in a single retained floor pair,
a press and drag to and drop of an icon associated with an origination floor in one retained floor pair onto an icon associated with a destination floor in another retained floor pair, and
a press and drag to and drop of an icon associated with a former destination floor as an origination floor in one retained floor pair onto an icon associated with a former origination floor as a destination floor in another retained floor pair;
generating an elevator service request packet based on the new elevator service request; and
transmitting the elevator service request packet to an elevator controller to make an elevator service request.

2. The method of claim 1, wherein the elevator service request packet includes information including the origination floor and the destination floor.

3. The method of claim 1 or 2, further comprising:
displaying a call elevator icon on the user interface in the recents list, the call elevator icon associated with the user input regarding an elevator service request; and
wherein another user input received is at the call elevator icon.

4. The method of any of claims 1 to 3, further comprising:
displaying an information icon on the user interface in the recents list, the information icon associated with the user input regarding an elevator service request; and
wherein another user input received is at the information icon.

5. The method of any of claims 1 to 4, further including a user input is a press and hold on the at least one retained floor pair in the recents list, wherein the user device provides additional information regarding the floors in the selected retained floor pair.

6. The method of any of claims 1 to 5 wherein the recents list includes at least one icon associated with a retained floor pair indicative of a direction of travel from an origination floor to a destination floor.

7. The method of any of claims 1 to 6, further comprising:
storing data related to a most recent elevator trip in a memory; and
at least one of:
displaying a retained floor set associated with the most recent elevator trip on the display at a top of the recents list;
not displaying a retained floor set associated with the most recent elevator trip on the display of the recents list if the opposite direction trip is already displayed;
not displaying a retained floor set associated with the most recent elevator trip on the display of the recents list if the origination floor and the destination floor of the most recent elevator trip is already displayed anywhere in the recents list.

8. A user device for making elevator service requests, the user device comprising:
at least one processor;
a display; and
memory having instructions stored thereon that, when executed by the at least one processor, cause the user device to:
populate a recents list with at least one retained floor pair, wherein each retained floor pair includes at least an origination floor and a destination floor; and
display the recents list on the display;
receive a user input on the recents list indicating a new elevator service request related to one of the retained floor pairs; wherein the user input includes at least one of;
a swipe input on the at least one retained floor pair,
a press and drag to and drop of an icon associated with an origination floor onto an icon associated with a destination floor in a single retained floor pair,
a press and drag to and drop of an icon associated with an origination floor in one retained floor pair onto an icon associated with a destination floor in another retained floor pair, and
a press and drag to and drop of an icon associated with a former destination floor as an origination floor in one retained floor pair onto an icon associated with a former origination floor as a destination floor in another retained floor pair;
generate an elevator service request packet based on the new elevator service request; and
transmit the elevator service request packet to an elevator controller to make an elevator service request.

9. The user device of claim 8, wherein the elevator service request packet includes information including the origination floor and the destination floor.

10. The user device of claim 8 or 9, the instructions further comprising additional instructions to display an information region on the user interface, the information region including building information.

11. The user device of claim 10, the instructions further comprising additional instructions to:
display a call elevator icon on the user interface in the recents list, the call elevator icon associated with the user input regarding an elevator service request; and
wherein the user input received on the recents list is at the call elevator icon.

12. The user device of any of claims 8 to 11, the instructions further comprising additional instructions to:
display an information icon on the user interface in the recents list, the information icon associated with the user input regarding an elevator service request; and
wherein another user input received is at the information icon.

13. The user device of any of claims 8 to 12, the instructions further comprising additional instructions receive a user input and if the user input press and hold on the at least one retained floor pair in the recents list, then user device provides additional information regarding the floors in the selected retained floor pair.

14. The user device of any of claims 8 to 13, wherein the recents list includes at least one icon associated with a retained floor pair indicative of a direction of travel from an origination floor to a destination floor.

15. The user device of any of claims 8 to 14, the instructions further comprising additional instructions to:
store data related to a most recent elevator trip in a memory; and
at least one of:
display a retained floor pair associated with the most recent elevator trip on the display at a top of the recents list.
not display a retained floor set associated with the most recent elevator trip on the display of the recents list if the opposite direction trip is already displayed; and
not displaying a retained floor set associated with the most recent elevator trip on the display of the recents list if the origination floor and the destination floor of the most recent elevator trip is already displayed anywhere in the recents list.
